# EUROPEAN PATENT SPECIFICATION

(11) **EP 2 792 479 B1**
(45) Date of publication and mention of the grant of the patent: **02.11.2016**
(21) Application number: 11877598.0
(22) Date of filing: 12.12.2011
(51) Int. Cl.: B32B 1/08, F16L 11/06, B32B 25/04, B32B 25/08, B32B 25/14, B32B 27/06, B32B 27/28, C08L 23/08, B32B 27/34

(54) **RUBBER/RESIN COMPOSITE HOSE**
SCHLAUCH AUS GUMMI-/HARZVERBUND
MANCHE COMPOSITE CAOUTCHOUC/RÉSINE

(43) Date of publication of application: 22.10.2014
(73) Proprietor: The Yokohama Rubber Co., Ltd., Minato-ku Tokyo 105-8685 (JP)
(72) Inventor: OISHI Hideyuki, Hiratsuka City Kanagawa 254-8601 (JP); KOIDE Motohisa, Hiratsuka City Kanagawa 254-8601 (JP); SHINODA Yasuaki, Hiratsuka City Kanagawa 254-8601 (JP); TORII Naoto, Hiratsuka City Kanagawa 254-8601 (JP)
(74) Representative: Dilg, Haeusler, Schindelmann Patentanwaltsgesellschaft mbH
(86) International application number: PCT/JP2011/078663
(87) International publication number: WO 2013/088489

(56) References cited:
- WO-A1-2009/059108
- JP-A- H0 724 963
- JP-A- H07 117 178
- JP-A- H07 266 501
- JP-A- S61 118 443
- JP-A- 2001 162 645
- JP-A- 2001 200 961
- JP-A- 2010 249 316
- DATABASE WPI Week 199550 Thomson Scientific, London, GB; AN 1995-389531 XP002741127, & JP H07 266501 A (MARUGO GUMU KOGYO KK) 17 October 1995 (1995-10-17)

## Description

### TECHNICAL FIELD

The present invention relates to a rubber/resin composite hose.

### BACKGROUND ART

Conventionally, a resin and rubber laminate that is a combination of a resin material and a rubber material is normally used in hose for the transport of liquids, as typified by hose for liquid propane gas (LPG hose) or car air conditioner hose, and, normally, a method of bonding between the resin and the rubber uses an adhesive, or a surface treatment of the resin material is carried out. However, in order to obtain good adhesion conditions, it is necessary to carry out these processes under defined conditions, so not only does the number of work processes increase, but there is also the problem of production cost, and the like. Therefore, the applicant of the present application has proposed fusion bonding between ultrahigh molecular weight polyethylene (PE) and rubber (fusion bonding that occurs by intertwining the molecular chains of both materials by heating to above the melting point of ultrahigh molecular weight PE) (Patent Document 1). Also, bonding of polyamide resin and rubber has been proposed (Patent Documents 2 to 4). Also, the applicant of the present application has previously proposed bonding between polyamide resin and rubber in Patent Document 5.

However, in each case, the bonding technology is between limited materials, so a technology that can be applied to bonding a wider range of resin materials and rubber materials is required.

### PRIOR ART DOCUMENTS

### PATENT DOCUMENTS

Patent Document 1: Japanese Examined Patent No. H07-117179
Patent Document 2: Japanese Patent No. 3891718
Patent Document 3: Japanese Patent No. 2589238
Patent Document 4: Japanese Patent No. 3381398
Patent Document 5: Japanese Unexamined Patent Application Publication No. 2002-079614

WO 2009/059108 relates to a pipe or tube article which comprises an innermost layer, wherein the innermost layer has a thickness of about 6.3 to about 102 mm and comprises an ionomer composition. The ionomer composition has a melting point of about 80°C or higher. The article provides long lifetime, highly abrasion-resistant pipes for mining and other transportation uses.

DATABASE WPI, Week 199550, Thomson Scientific, London, GB, AN 1995-389531, JP002741127 & JP H07 266501 A relate to the use of epoxidized rubber for a rubber layer or as an interface adhesive in order to improve adhesion between a synthetic resin layer and a rubber layer in a hose.

JP H07 266501 A relates to laminate of a synthetic resin and rubber that consists of a synthetic resin layer and a rubber layer, wherein epoxidized rubber or a blend of epoxidized rubber and rubber is used in the formation of the rubber layer or as the interface adhesive of both layers. This laminate is especially useful for a fuel hose wherein the synthetic resin layer is a fluoroplastic hose inner pipe and the rubber layer is a hose outer pipe of a blend of epoxidized natural rubber and NBR/PVC.

JP H07 117178 A relates to a composite flexible hose that is constituted of an innermost layer, an intermediate rubber layer, a fiber reinforced layer and an outer surface rubber layer, which are laminated sequentially from the inner side of the hose, where the innermost layer is constituted of a modified polyamide obtained by blending polyamide with modified polyolefin containing carboxyl group.

JP 2001 162645 A relates to a method for manufacturing a rubber/polyamide composite by integrally bonding and fixing a rubber and a polyamide strongly without interposing an adhesive between them.

JP 2001 200961 A relates to a composite flexible hose capable of remarkably reducing permeation of gas and usable in common with R12 and R134a refrigerants without arranging an adhesive layer by enabling stable strong adhesion between the inmost layer of an inner tube and an intermediate resin layer (a barrier layer).

JP 2010249316 A relates to a refrigerant transporting hose that includes a gas barrier layer comprising a polyamide resin composition.

JP H07 24963 A relates to a brake hose having fiber reinforced layers on an inner layer rubber tube and provided with an outside rubber layer on the fiber reinforced layers, wherein a thermosetting resin tube having bending elasticity of 50,000kgf/cm² or less at 20°C is provided at the inside of the inner layer rubber tube.

JP S61 118443 A relates to a composite material having excellent compatibility of the components and improved hardness and strength of a diene rubber, and suitable as a covering material of golf ball, obtained by compounding a diene rubber with a polyolefin resin containing a modified carboxylic acid.

### SUMMARY OF THE INVENTION

### Problem to be Solved by the Invention

Therefore, it is an object of the present invention to provide a rubber/resin composite hose that has excellent adhesion properties between a resin layer and a rubber layer.

### Means to Solve the Problem

As a result of diligent research by the inventors to solve this problem, it was found that a rubber/resin composite hose that includes an inner tube, the inner tube having a resin layer as an innermost layer; and a rubber layer adjacent to the innermost layer, in which a material used in the resin layer is a resin composition that includes a resin including at least an ionomer containing a metal carboxylate, and a material used in the rubber layer is a rubber composition that includes a rubber including at least an epoxidized rubber, has excellent adhesion between the resin layer and the rubber layer, and the present invention was completed.

Specifically, the present invention provides the following 1 to 13.
1. A rubber/resin composite hose comprising: an inner tube, and the inner tube including a resin layer as an innermost layer and a rubber layer adjacent to the innermost layer;
   a material used in the resin layer being a resin composition that includes a resin including at least an ionomer containing a metal carboxylate,
   a material used in the rubber layer being a rubber composition that includes a rubber including at least an epoxidized rubber.
2. The rubber/resin composite hose according to 1 above, wherein a quantity of the ionomer in the resin is from 10 to 100 mass% of a total quantity of the resin, and
   a quantity of the epoxidized rubber in the rubber is from 10 to 100 mass% of a total quantity of the rubber.
3. The rubber/resin composite hose according to 1 or 2 above, wherein the epoxidized rubber is an epoxidized natural rubber.
4. The rubber/resin composite hose according to any of 1 to 3 above, wherein an epoxidization rate of the epoxidized rubber is from 2 to 75 mol%.
5. The rubber/resin composite hose according to any of 1 to 4 above, wherein the rubber further includes an acrylonitrile butadiene rubber (NBR).
6. The rubber/resin composite hose according to any of 1 to 5 above, wherein the resin further includes a polyamide.
7. The rubber/resin composite hose according to 6 above, wherein the polyamide is at least one selected from the group consisting of polyamide 6, polyamide 11, polyamide 12, polyamide 4-6, polyamide 6-6, polyamide 6-10, polyamide 6-12, and polyamide MXD-6.
8. The rubber/resin composite hose according to any of 1 to 7 above, wherein the rubber composition further includes a thiuram vulcanization accelerator and/or a sulfenamide vulcanization accelerator, and an alkylphenol-formaldehyde resin.
9. The rubber/resin composite hose according to any of 1 to 8 above, wherein there is no adhesive layer between the resin layer and the rubber layer.
10. The rubber/resin composite hose according to any of 1 to 9 above, wherein the resin layer and the rubber layer are directly bonded.
11. The rubber/resin composite hose according to any of 1 to 10 above, wherein a reinforcing layer and an outer layer are provided on an outer side of the inner tube.
12. The rubber/resin composite hose according to 11 above, wherein a material used in the reinforcing layer is a brass-plated wire.
13. A method of manufacturing a rubber/resin composite hose, comprising: manufacturing the rubber/resin composite hose described in any of 1 to 12 above, by at least vulcanization bonding between the resin layer and the rubber layer.

### EFFECT OF THE INVENTION

The rubber/resin composite hose according to the present invention has excellent adhesion properties between the resin layer and the rubber layer.

The rubber/resin composite hose obtained by the method of manufacturing a rubber/resin composite hose according to the present invention has excellent adhesion properties between the resin layer and the rubber layer.

### BRIEF DESCRIPTION OF THE DRAWING

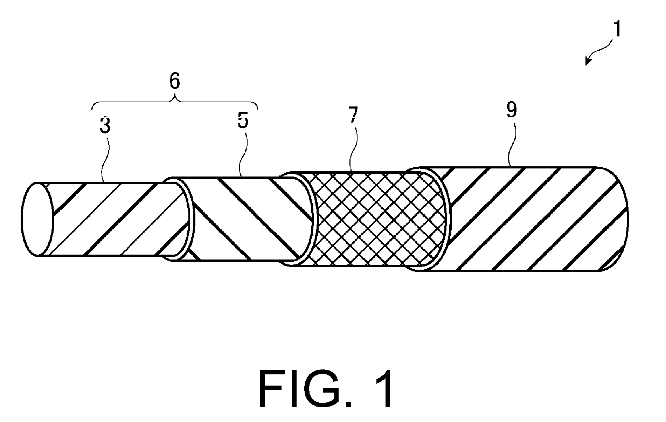

FIG. 1 is a perspective view schematically illustrating a cutaway of each layer of a hose that is an example of a rubber/resin composite hose according to the present invention.

### BEST MODE FOR CARRYING OUT THE INVENTION

The present invention is described in detail below.

A rubber/resin composite hose according to the present invention includes an inner tube, the inner tube having a resin layer as an innermost layer and a rubber layer adjacent to the innermost layer. In such a rubber/resin composite hose, a material used in the resin layer is a resin composition that includes a resin including at least an ionomer containing a metal carboxylate, and a material used in the rubber layer is a rubber composition that includes a rubber including at least an epoxidized rubber, thereby forming a rubber/resin composite hose.

The material used in the resin layer of the rubber/resin composite hose according to the present invention is a resin composition that includes a resin including at least an ionomer containing a metal carboxylate, and the material used in the rubber layer is a rubber composition that includes a rubber including at least an epoxidized rubber, so it is possible to bond between the resin layer and the rubber layer, and the adhesion properties between the resin layer and the rubber layer are excellent. Also, it is possible to directly bond between the resin layer and the rubber layer without an adhesion process (for example, applying adhesive, surface treatment of the resin layer) between the resin layer and the rubber layer.

The inventors of the present application consider that the adhesion between the resin layer and the rubber layer is due to the reaction between the metal carboxylate and the epoxy group of the epoxidized rubber. The above mechanism is an inference by the inventors of the present application, but if the mechanism of the invention of the present application is a mechanism other than that described above, it is still within the scope of the present invention.

The rubber/resin composite hose according to the present invention includes the inner tube. Also, the inner tube includes the resin layer as the innermost layer and the rubber layer adjacent to the innermost layer.

In a preferred form of the rubber/resin composite hose according to the present invention, a reinforcing layer and an outer layer are provided on an outer side of the inner tube. The reinforcing layer can be adjacent to the rubber layer.

In the rubber/resin composite hose according to the present invention, the resin layer and the rubber layer can be directly bonded.

In the present invention, direct bonding of the resin layer and the rubber layer is a preferred form from the point of view of reduction of manufacturing processes and excellent productivity.

In the present invention, not having an adhesive layer between the resin layer and the rubber layer is a preferred form from the point of view of reduction of manufacturing processes and excellent working environment and productivity.

Also, in the present invention, not applying a surface treatment agent to a surface of the resin layer is a preferred form from the point of view of reduction of manufacturing processes and excellent productivity.

The thickness of the innermost layer (resin layer) is preferably from 0.05 to 1.00 mm, from the point of view of flexibility of the hose and productivity.

The thickness of the rubber layer is preferably from 0.5 to 6.0 mm from the point of view of flexibility of the hose and productivity.

The thickness of the inner tube is preferably from 0.6 to 7.0 mm.

The thickness of the outer layer is preferably from 1.0 to 4.0 mm, from the point of view of flexibility of the hose and productivity.

An example of a preferred embodiment of a rubber/resin composite hose of the present invention is described below while referencing the attached drawing. However, the present invention is not limited to the attached drawing.

FIG. 1 is a perspective view schematically illustrating a cutaway of each layer of a hose that is an example of a rubber/resin composite hose according to the present invention.

In FIG. 1, a rubber/resin composite hose 1 includes an inner tube 6, and further includes a reinforcing layer 7 on the inner tube 6, and an outer layer 9 on the reinforcing layer 7. The inner tube 6 includes a resin layer 3 as an innermost layer, and a rubber layer 5 adjacent to the resin layer 3 (innermost layer).

A description of the innermost layer is given below.

In the present invention, the innermost layer is the resin layer. Also, a material used in the resin layer is a resin composition that includes a resin including at least an ionomer containing a metal carboxylate.

Because the innermost layer in the present invention is the resin layer, the present invention has excellent impermeability to liquids and gases and oil resistance.

The following is a description of the resin composition used when manufacturing the innermost layer.

In the present invention, the resin composition used is a composition that includes a resin including at least an ionomer containing a metal carboxylate.

The following is a description of the ionomer.

The ionomer that is at least included in the resin included in the resin composition is not limited in particular, provided it is a polymer containing a metal carboxylate.

The metal of the metal carboxylate in the ionomer is, for example, sodium, zinc, or magnesium. Of these, zinc is preferable from the point of view of more excellent adhesion between the resin layer and the rubber layer.

The ionomer may be a resin in which, for example, an ethylene-methacrylate copolymer is cross-linked between molecules with a metal ion (for example, zinc ion).

A method of producing the ionomer is not particularly limited. Examples thereof include conventionally known products. A single ionomer can be used or a combination of two or more ionomers can be used.

In the present invention, the resin includes at least the ionomer.

A polymer other than the ionomer that can be included in the resin include, for example, a polyamide, and a polyolefin.

Of these, preferably, the resin further includes apolyamide from the point of view of excellent impermeability to gases, oil resistance, and mechanical strength.

The polyamide is preferably at least one selected from the group consisting of polyamide 6, polyamide 11, polyamide 12, polyamide 4-6, polyamide 6-6, polyamide 6-10, polyamide 6-12, polyamide MXD-6, from the point of view of more excellent impermeability to gases, oil resistance, and mechanical strength.

There is no particular limitation on the manufacture of the polymer other than the ionomer. Examples thereof include conventionally known products. A single or a combination of two or more types can be used as the polymer other than the ionomer.

In the resin, preferably, a content of the ionomer is from 10 to 100 mass%, and more preferably from 20 to 100 mass% of the total quantity of the resin, from the contribution of the ionomer content to the adhesion properties.

If the resin includes the polymer other than the ionomer, the quantity of the polymer (for example, polyamide) other than the ionomer can be 90 mass% or less of the total quantity of the resin. Preferably, the quantity of the polymer other than the ionomer is from 10 to 90 mass%, and more preferably from 40 to 90 mass% of the total quantity of the resin, from the point of view of improving impermeability to gases, oil resistance, and mechanical strength.

The resin composition can include additives as desired, as long as the object of the present invention is not hindered. Examples of the additives include fillers, reinforcing agents, anti-aging agents, vulcanizing agents, vulcanization accelerators, vulcanization activators, plasticizers, pigments (dyes), tackifiers, lubricants, dispersing agents, and processing aids.

A manufacturing method of the resin composition is not particularly limited. For example, a method in which an ionomer, a polymer other than an ionomer which can be used if necessary, and additives are mixed using a biaxial mixing extruder can be used. A preferred form is to use a mixing temperature that is not less than or close to the melting point of the resin.

A description of the rubber layer is given below.

In the present invention, the rubber layer is adjacent to the innermost layer. The material used in the rubber layer is a rubber composition that includes a rubber including at least an epoxidized rubber.

A description of the rubber composition used when manufacturing the rubber layer is given below.

In the present invention, there is no particular limitation on the epoxidized rubber included in the rubber included in the rubber composition, provided it is rubber that has an epoxy group. Preferably, the epoxidized rubber is an epoxidized natural rubber from the point of view of more excellent adhesion properties between the resin layer and the rubber layer.

Because the epoxy group in the epoxidized rubber contributes to the adhesion between the resin layer and the rubber layer, preferably, an epoxidization rate is from 2 to 75 mol%, and more preferably from 20 to 75 mol%. The epoxidization rate means the percentage of the total number of double bonds in the raw material rubber (for example, natural rubber) before epoxidization that have been epoxidized.

There is no particular limitation on the manufacture of the epoxidized rubber. Examples thereof include conventionally known products. A single epoxidized rubber can be used or a combination of two or more types can be used.

In the present invention, the rubber includes at least the epoxidized rubber.

Examples of the rubber other than the epoxidized rubber that can be included in the rubber include acrylonitrile-butadiene rubber (NBR), natural rubber (NR), butadiene rubber (BR), styrene-butadiene copolymer rubber (SBR), polyisoprene rubber (IR), butyl rubber (IIR), chlorobutyl rubber (Cl-IIR), bromobutyl rubber (Br-IIR), chloroprene rubber, ethylene-propylene copolymer rubber, styrene-isoprene copolymer rubber, styrene-isoprene-butadiene copolymer rubber, isoprene-butadiene copolymer rubber, and chlorosulfonated polyethylene.

Preferably, the acrylonitrile-butadiene rubber (NBR) is further included in the rubber, from the point of view of more excellent adhesion properties between the resin layer and the rubber layer, and excellent oil resistance.

There is no particular limitation on the manufacture of the rubber other than the epoxidized rubber. Examples thereof include conventionally known products. A single rubber other than the epoxidized rubber can be used or a combination of two or more types can be used.

Preferably, the quantity of the epoxidized rubber in the rubber is from 10 to 100 mass% of the total quantity of the rubber, for more excellent adhesion between the resin layer and the rubber layer, and more preferably from 20 to 70 mass% taking into consideration various properties such as low temperature resistance.

If the rubber other than the epoxidized rubber is included in the rubber, the quantity of the rubber (for example, acrylonitrile-butadiene rubber) other than the epoxidized rubber can be 90 mass% or less of the total quantity of the rubber. Preferably, the quantity of the rubber other than the epoxidized rubber is from 30 to 90 mass%, and more preferably is 50 to 90 mass% of the total quantity of the rubber, from the point of view of more excellent adhesion between the resin layer and the rubber layer, and excellent oil resistance.

In the present invention, preferably, a thiuram vulcanization accelerator and/or a sulfenamide vulcanization accelerator is further included in the rubber composition, from the point of view of more excellent adhesion between the resin layer and the rubber layer, excellent vulcanized adhesion between the rubber layer and the reinforcing layer, and excellent adhesion between the rubber layer and the reinforcing layer. Also, preferably, an alkylphenol-formaldehyde resin is further included in the rubber composition, from the point of view of more excellent adhesion between the resin layer and the rubber layer, excellent vulcanized adhesion between the rubber layer and the reinforcing layer, and excellent adhesion between the rubber layer and the reinforcing layer. Preferably, a thiuram vulcanization accelerator and/or a sulfenamide vulcanization accelerator and an alkylphenol-formaldehyde resin is further included in the rubber composition, from the point of view of more excellent adhesion between the resin layer and the rubber layer, excellent vulcanized adhesion between the rubber layer and the reinforcing layer, and excellent adhesion between the rubber layer and the reinforcing layer.

In the present invention, by further including a thiuram vulcanization accelerator and/or a sulfenamide vulcanization accelerator and an alkylphenol-formaldehyde resin in the rubber composition, more excellent adhesion between the resin layer and the rubber layer, and stronger direct bonding between the rubber layer and the reinforcing layer can be obtained.

Also, by further including a thiuram vulcanization accelerator and/or a sulfenamide vulcanization accelerator in the rubber composition (in particular, by including a sulfenamide accelerator), the adhesion between the resin layer and the rubber layer under high temperatures (for example, from 40 to 120 °C, and 70 °C is a preferred form) can be equal to or better than the adhesion between the resin layer and the rubber layer when current adhesives (for example, phenolic resin adhesives) are used.

In the present invention, direct bonding of the rubber layer and the reinforcing layer is a preferred form from the point of view of reduction of manufacturing processes and excellent productivity.

Also, not having an adhesive layer between the rubber layer and the reinforcing layer is a preferred form from the point of view of reduction of manufacturing processes and excellent working environment and productivity.

The following is a description of the thiuram vulcanization accelerator.

In the present invention, there is no particular limitation on the thiuram vulcanization accelerator that can be further included in the rubber composition, provided that it is a thiuram vulcanization accelerator that is commonly blended into rubber. For example, the thiuram vulcanization accelerator represented by the following Formula (1) can be used.

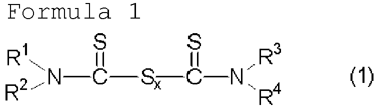

In the above formula (1), R¹ to R⁴ represent an aliphatic hydrocarbon group, an alicyclic hydrocarbon group, or an aromatic hydrocarbon group, each having from 1 to 18 carbons, and x represents an integer from 1 to 4.

The aliphatic hydrocarbon group can be, for example, a straight chain alkyl group such as a methyl group, an ethyl group, a propyl group, a butyl group, a pentyl group, an octyl group, a dodecyl group, and a stearyl group; a branched alkyl group such as an isopropyl group, an isobutyl group, an s-butyl group, a t-butyl group, an isopentyl group, a neopentyl group, a t-pentyl group, a 1-methy butyl group, a 1-methyl heptyl group, and a 2-ethyl hexyl group; an alkenyl group such as a vinyl group, an aryl group, a propenyl group, a but-2-en-1-yl (-CH₂-CH=CH-CH₃), and a but-3-en-1-yl (-CH₂-CH₂-CH=CH₂); or an alkynyl group such as an ethynyl group, a propynyl group, but-2-yn-1-yl (-CH₂-C≡C-CH₃), and a but-3-yn-1-yl (-CH₂-CH₂-C≡CH).

The alicyclic hydrocarbon group can be, for example, a cyclohexyl group, a methyl cyclohexyl group, or an ethyl cyclohexyl group.

The aromatic hydrocarbon group can be, for example, an aralkyl group such as a benzyl group, and a phenethyl group; or an aryl group such as a phenyl group, a tolyl group (o-, m-, p-), a dimethylphenyl group, and a mesityl group.

Specific examples of the thiuram vulcanization accelerator include tetramethyl thiuram monosulfide; or thiuram disulfide such as tetraethylthiuram disulfide, tetrabutylthiuram disulfide, tetrahexylthiuram disulfide, tetrakis(2-ethylhexyl)thiuram disulfide, tetrastearyl thiuram disulfide, tetracyclohexyl thiuram disulfide, and tetrabenzyl thiuram disulfide.

Of these, tetramethyl thiuram monosulfide, tetraethylthiuram disulfide, and tetrakis(2-ethylhexyl)thiuram disulfide, and the like are preferred from the point of view of more excellent adhesion between the resin layer and the rubber layer, excellent vulcanized adhesion between the rubber layer and the reinforcing layer, and excellent rubber properties.

A single thiuram vulcanization accelerator can be used or a combination of two or more thiuram vulcanization accelerators can be used. A method of producing the thiuram vulcanization accelerator is not particularly limited. Examples thereof include conventionally known methods.

Preferably, the quantity of thiuram vulcanization accelerator is from 0.2 to 3.0 parts by mass, more preferably from 0.25 to 2.75 parts by mass, and most preferably from 0.3 to 2.5 parts by mass, per 100 parts by mass of the rubber including the epoxidized rubber, from the point of view of more excellent adhesion between the resin layer and the rubber layer, excellent vulcanized adhesion between the rubber layer and the reinforcing layer, and excellent adhesion between the rubber layer and the reinforcing layer.

If the quantity of thiuram vulcanization accelerator is 0.2 parts or greater by mass per 100 parts by mass of the rubber including the epoxidized rubber, the adhesion properties of the reinforcing layer (in particular, brass-plated steel wire) are excellent (specifically, the adhesion force is high and the amount of rubber attachment is large), and this is desirable.

If the quantity of the thiuram vulcanization accelerator is 3.0 parts or less by mass per 100 parts by mass of the rubber including the epoxidized rubber, the scorch time becomes suitably long, the extrusion processability becomes excellent, and this is desirable.

The following is a description of the sulfenamide vulcanization accelerator.

In the present invention, there is no particular limitation on the sulfenamide vulcanization accelerator that can be included in the rubber composition, provided that it is a sulfenamide vulcanization accelerator that is commonly blended into rubber.

The sulfenamide vulcanization accelerator may be, for example, N-cyclohexyl-2-benzothiazolyl sulfenamide, or N-tert-butyl-2-benzothiazolyl sulfenamide.

Of these, N-t-butyl-2-benzothiazolyl sulfenamide is preferable from the point of view of more excellent adhesion between the resin layer and the rubber layer, excellent vulcanized adhesion between the rubber layer and the reinforcing layer, and excellent adhesion properties between the rubber layer and the reinforcing layer.

A single sulfenamide vulcanization accelerator can be used or a combination of two or more sulfenamide vulcanization accelerators can be used. A method of producing the sulfenamide vulcanization accelerator is not particularly limited. Examples thereof include conventionally known methods.

Preferably, the quantity of the sulfenamide vulcanization accelerator is from 0.5 to 5.0 parts by mass, more preferably from 0.6 to 4.0 parts by mass, and most preferably from 0.7 to 3.0 parts by mass, per 100 parts by mass of the rubber including the epoxidized rubber, from the point of view of more excellent adhesion between the resin layer and the rubber layer, excellent vulcanized adhesion between the rubber layer and the reinforcing layer, and excellent adhesion between the rubber layer and the reinforcing layer.

If the quantity of the sulfenamide vulcanization accelerator is 0.5 parts or greater by mass per 100 parts by mass of the rubber including the epoxidized rubber, the adhesion properties of the reinforcing layer (in particular, brass-plated steel wire) are excellent (specifically, the adhesion force is high and the amount of rubber attachment is large), the necessary properties can be exhibited, and this is desirable.

If the quantity of the sulfenamide vulcanization accelerator is 5.0 parts or less by mass per 100 parts by mass of the rubber including the epoxidized rubber, the scorch time becomes suitably long, the extrusion processability and applicability become excellent, and this is desirable.

The alkylphenol-formaldehyde resin is described below.

In the present invention, there is no particular limitation on the alkylphenol-formaldehyde resin that can be further included in the rubber composition, provided that it is a alkylphenol-formaldehyde resin that is commonly blended with rubber as a vulcanizing agent. Examples thereof include conventionally known products.

Of these, from the point of view of more excellent adhesion between the resin layer and the rubber layer, excellent vulcanized adhesion between the rubber layer and the reinforcing layer, and excellent adhesion between the rubber layer and the reinforcing layer, a halogenated alkylphenol-formaldehyde resin is preferable, and a brominated alkylphenol-formaldehyde resin is more preferable.

A single alkylphenol-formaldehyde resin can be used or a combination of two or more alkylphenol-formaldehyde resins can be used. A method of manufacturing the alkylphenol-formaldehyde resin is not particularly limited. Examples thereof include conventionally known methods.

Preferably, the quantity of the alkylphenol-formaldehyde resin is from 1 to 10 parts by mass, more preferably from 2 to 8 parts by mass, and most preferably from 3 to 7 parts by mass, per 100 parts by mass of the rubber including the epoxidized rubber, from the point of view of more excellent adhesion between the resin layer and the rubber layer, excellent vulcanized adhesion between the rubber layer and the reinforcing layer, and excellent adhesion between the rubber layer and the reinforcing layer.

If the quantity of the alkylphenol-formaldehyde resin is 1 part or greater by mass per 100 parts by mass of the rubber including the epoxidized rubber, the adhesion properties of the reinforcing layer (in particular, brass-plated steel wire) are excellent (specifically, the adhesion force is high and the amount of rubber attachment is large), and this is desirable.

If the quantity of the alkylphenol-formaldehyde resin is 10 parts or less by mass per 100 parts by mass of the rubber including the epoxidized rubber, the hardness of the rubber becomes appropriate, the scorch time becomes suitably long, the extrusion processability and applicability become excellent, and this is desirable.

In the present invention, the rubber composition can include a sulfur as a vulcanizing agent. The sulfur that can be further included in the rubber composition is not particularly limited. Examples thereof include conventionally known products. Specific examples include a powdered sulfur, a precipitated sulfur, a colloidal sulfur, a surface treated sulfur, and an insoluble sulfur.

A single sulfur may be used alone or a combination of two or more sulfurs may be used.

The quantity of the sulfur is preferably from 1.5 to 3.0 parts by mass, and more preferably from 1.7 to 2.5 parts by mass, per 100 parts by mass in the rubber including the epoxidized rubber, from the point of view of good tensile properties after vulcanization (for example, tensile stress at 100% elongation, tensile strength, and the like) and heat aging resistance.

The rubber composition can include additives as desired, as long as the object of the present invention is not hindered. The additives can include, for example, fillers, reinforcing agents, anti-aging agents, vulcanizing agents other than the sulfur, vulcanization accelerators other than the thiuram vulcanization accelerator and the sulfenamide vulcanization accelerator (for example, dibenzothiazyl disulfide), resins other than the alkylphenol-formaldehyde resin, vulcanization activating agents, plasticizers, pigments (dyes), tackifying agents, lubricants, dispersing agents, and process enhancing agents.

In the present invention, a manufacturing method of the rubber composition is not particularly limited. Examples thereof include a method wherein the rubber and the thiuram vulcanization accelerator, the sulfenamide vulcanization accelerator, the alkylphenol-formaldehyde resin, the sulfur, and the additives, which can be used as necessary, are mixed (kneaded) using an open roll, a kneader, an extruder, a universal blender, or a batch kneader.

A description of the reinforcing layer is given below.

The rubber/resin composite hose of the present invention can maintain strength and have excellent pressure resistance by having the reinforcing layer.

A material for the reinforcing layer that can be included in the rubber/resin composite hose of the present invention is not particularly limited.

Examples of the material used in the reinforcing layer include, for example, fiber materials such as a polyester-based fiber, a polyamide-based fiber, an aramid fiber, vinylon fiber, a rayon fiber, a poly-p-phenylene-benzobisoxazole (PBO) fiber, a polyketone fiber, and a polyarylate fiber; and metal materials such as a hard steel wire (e.g. a brass-plated wire, a zinc-plated wire, and the like), and the like.

Of these, for hose that is required to be high pressure resistant, a brass-plated wire is preferable from the point of view of excellent vulcanized adhesion between the rubber layer and the reinforcing layer, and excellent adhesion properties between the rubber layer and the reinforcing layer.

There is no limitation on the brass-plated wire, provided it is used for reinforcing a rubber hose.

A shape of the reinforcing layer is not particularly limited. Examples thereof include a braid wind shape and a spiral wind shape.

A single material for the reinforcing layer can be used or a combination of two or more materials for the reinforcing layer can be used.

If the reinforcing layer is the brass-plated wire, preferably, the rubber composition further includes a thiuram vulcanization accelerator and/or a sulfenamide vulcanization accelerator, and an alkylphenol-formaldehyde resin, from the point of view of enabling the adhesion to the brass-plated wire, while maintaining the adhesion to the resin layer.

A description of the outer layer is given below.

The rubber/resin composite hose of the present invention can protect the reinforcing layer and have excellent durability by having the outer layer.

A preferred form of the outer layer that can be included in the rubber/resin composite hose of the present invention is a rubber layer.

A material for the outer layer that can be included in the rubber/resin composite hose of the present invention is not particularly limited. Examples of the material used for the outer layer include other rubber compositions, as well as the rubber composition used in the present invention.

There is no particular limitation on the rubber included in the rubber composition used in forming the outer layer. Examples include styrene butadiene rubber (SBR), acrylonitrile butadiene rubber (NBR), butyl rubber (IIR), ethylene propylene diene rubber (EPDM), hydrogenated NBR (HNBR), chloroprene rubber (CR), chlorosulfonated methyl polyethylene (CSM), chlorinated polyethylene (CM), brominated butyl rubber (BIIR), chlorinated butyl rubber (CIIR), and BIMS.

There is no particular limitation on the manufacture of the rubber/resin composite hose of the present invention. For example, a method that uses at least vulcanized adhesion between the resin layer and the rubber layer can be used. More specifically, for example, a method in which the resin layer, the rubber layer, the reinforcing layer, and the outer layer are laminated in that order on a mandrel and, thereafter, these layers are bonded by vulcanizing can be used. Also, in the present invention, it is possible to directly bond the resin layer and the rubber layer without an adhesive process (for example, applying adhesive, surface treatment of the resin layer) between the resin layer and the rubber layer.

The temperature when vulcanizing is preferably from 140 to 190°C, from the point of view of the adhesion properties between the resin layer and the rubber layer and exhibiting the rubber properties.

The vulcanization time is preferably from 30 to 180 minutes, from the point of view of the adhesion properties between the resin layer and the rubber layer, rubber properties, and energy efficiency.

Examples of vulcanization methods include press vulcanization, steam vulcanization, oven vulcanization (hot air vulcanization), and hot water vulcanization.

In the rubber/resin composite hose of the present invention, preferably, the adhesion strength between the resin layer and the rubber layer is 50 N/25 mm or greater.

In the present invention, the adhesion strength between the resin layer and the rubber layer is the value obtained by measuring the adhesion strength (units = N/25 mm width) in a peeling test. In the peeling test, a resin sheet (sheet thickness: 0.2 mm) obtained using the resin composition and a rubber sheet (raw sheet thickness: 2.5 mm) obtained using the rubber composition are bonded together and press vulcanized at 148°C for 60 minutes, from which sheet-shaped test specimens having a width of 25 mm are produced. In the peeling test, the rubber layer of the sheet-shaped test specimens obtained is peeled at an angle of 180° from the resin layer at a peeling speed of 50 mm/minute at room temperature (23°C) or at 70°C using an autograph.

In the present invention, the adhesion strength between the rubber layer and the reinforcing layer (brass-plated wire) is the value obtained by measuring the adhesion strength (units = N/25 mm width) in a peeling test. The brass-plated wire is spiral-wound on a 25 mm external diameter steel mandrel, then the rubber sheet (raw sheet thickness: 2.5 mm) obtained using the rubber composition is bonded on top thereof, and vulcanization is carried out in a vulcanizer at 148°C for 60 minutes, to obtain hose shaped test specimens. The rubber on the left and right of the hose-shaped test specimens obtained are cut so that the width of the rubber sheet is 25 mm, and a peeling test is carried out on the adhesion between the remaining rubber portion and wire portion by peeling the rubber from the reinforcing layer at room temperature (23°C) using an autograph at a peeling speed of 50 mm/minute.

The rubber/resin composite hose of the present invention can be applied to, for example, a refrigerant transport hose (with carbon dioxide, HFC-134a (for car air conditioners), for example, as the refrigerant) or a hose for liquid propane gas (LPG hose).

### EXAMPLES

The present invention is described below in detail using working examples but the present invention is not limited to such working examples.

### <Evaluation>

The adhesion properties between the rubber and the resin (rubber/resin adhesion 1-4) and the adhesion properties between the reinforcing layer and the rubber layer were evaluated for the hose or laminates obtained as described below, using the following methods. The results thereof are shown in Tables 3, 4, 7, 8, 11, and 12. The rubber/resin adhesion 1-4 evaluation results were measured at room temperature unless indicated otherwise. In Table 11, the adhesion strength results measured at room temperature and at 70°C are shown for rubber/resin adhesion 1 and 2.

### 1. Adhesion properties between the rubber and the resin (rubber/resin adhesion 1-4)

### (1) Manufacture of test specimens used for rubber/resin adhesion 1 (using adhesive)

A phenolic resin adhesive (commercial name TY-PLY-BN (manufactured by LORD Far East, Inc.)) that was diluted by a factor of three in methyl ethyl ketone (MEK) was applied with a brush to a resin sheet 1 obtained as described below, and after drying, the resin sheet and a rubber sheet obtained as described below were bonded together, and press vulcanized at 148°C for 60 minutes, to obtain sheet-shaped test specimens.

For Working Examples I-1, II-1, and III-1, the rubber/resin adhesion 1 results are shown for comparison/reference.

### (2) Manufacture of test specimens used for rubber/resin adhesion 2

A resin sheet 1 obtained as described below and a rubber sheet obtained as described below were bonded together, and press vulcanized at 148°C for 60 minutes, to obtain sheet-shaped test specimens. When they were bonded together, adhesive was not used.

### (3) Manufacture of test specimens used for rubber/resin adhesion 3

A resin sheet 2 obtained as described below and a rubber sheet obtained as described below were bonded together, and press vulcanized at 148°C for 60 minutes, to obtain sheet-shaped test specimens. When they were bonded together, adhesive was not used.

### (4) Manufacture of test specimens used for rubber/resin adhesion 4

A resin sheet 3 (not including ionomer) obtained as described below and a rubber sheet obtained as described below were bonded together, and press vulcanized at 148°C for 60 minutes, to obtain sheet-shaped test specimens. When they were bonded together, adhesive was not used.

### (5) Evaluation conditions and evaluation criteria for rubber/resin adhesion 1-4

For each of the sheet-shaped test specimens obtained, the adhesion strength (units = N/25 mm width) was measured by carrying out peeling tests. In the peeling test, the rubber layer was peeled at an angle of 180° from the resin layer at a peeling speed of 50 mm/minute at room temperature (23°C) or at 70°C using an autograph. Also, after the peeling tests, the rubber attachment (%, the area percentage of the rubber remaining without peeling from the resin layer) was determined visually, and the failure condition after the peeling test was observed.

The criteria for evaluation of the failure condition were, ⊚: material failure (thick material failure), ○: material failure, Δ: material failure (thin material failure), ×: interface, Cut: rubber cut.

### 2. Adhesion properties between the reinforcing layer and the rubber layer (hose-shaped wire adhesion)

### (1) Manufacture of hose-shaped test specimens

First, a reinforcing layer was formed by spirally winding brass-plated wire on an iron mandrel having an outer diameter of 25 mm. Next, an unvulcanized sheet having a thickness of 2.5 mm that was prepared from each of the rubber compositions obtained was bonded onto the reinforcing layer, and vulcanized at 148°C for 60 minutes, to manufacture hose-shaped test specimens.

### (2) Method of evaluation of the hose-shaped test specimens

For each of the hose-shaped test specimens obtained, the adhesion strength (units = N/25 mm width) and the rubber attachment (units = %, area percentage of rubber remaining without peeling) were measured when the rubber outer layer was peeled at a peeling speed of 50 mm/minute.

### <Manufacture of resin sheet 1>

30 parts by mass of ionomer (ethylene-methacrylate resin copolymer with molecules crosslinked with zinc ions, trade name: Himilan 1706, manufactured by Dupont-Mitsui Polychemicals, Co., Ltd.) and 70 parts by mass of polyamide (11-Nylon, manufactured by Arkema) were mixed in a biaxial kneader, then it was extruded in a T die extruder to produce a sheet having a thickness of 0.2 mm. The resin sheet obtained was referred to as the resin sheet 1.

### <Manufacture of resin sheet 2>

50 parts by mass of ionomer (ethylene-methacrylate resin copolymer with molecules crosslinked with zinc ions, trade name: Himilan 1706, manufactured by Dupont-Mitsui Polychemicals, Co., Ltd.) and 50 parts by mass of polyamide (11-Nylon, manufactured by Arkema) were mixed in a biaxial kneader, then it was extruded in a T die extruder to produce a sheet having a thickness of 0.2 mm. The resin sheet obtained was referred to as the resin sheet 2.

### <Manufacture of resin sheet 3>

Polyamide (11-Nylon, manufactured by Arkema) was extruded in a T die extruder to produce a sheet having a thickness of 0.2 mm. The resin sheet obtained was referred to as the resin sheet 3.

### <Manufacture of rubber sheets>

Rubber sheets (unvulcanized) having a thickness of 2.5 mm were produced using a roll from rubber compositions A to C obtained as described below.

### <Manufacture of the Rubber Compositions>

The rubber compositions were manufactured by uniformly mixing the components shown in Table 1, Table 5, and Table 9 in the amounts (parts by mass) also shown in these tables using an enclosed kneader. The rubber compositions obtained were referred to as rubber compositions A1 to A10, rubber compositions B1 to B16, and rubber compositions C1 to C20.

| Table 1 | | | | | | | | | | |
|---|---|---|---|---|---|---|---|---|---|---|
| Rubber composition A | 1 | 2 | 3 | 4 | 5 | 6 | 7 | 8 | 9 | 10 |
| NBR1 | 50.00 | | | | | | | | | |
| NBR2 | 50.00 | 70.00 | 100.00 | 90.00 | 50.00 | 30.00 | | 70.00 | | |
| ENR1 (epoxidization rate = 50 mol%) | | 30.00 | | 10.00 | 50.00 | 70.00 | 100.00 | | 30.00 | 30.00 |
| ENR2 (epoxidization rate = 25 mol%) | | | | | | | | 30.00 | | |
| SBR | | | | | | | | | 70.00 | |
| NR | | | | | | | | | | 70.00 |
| Carbon black 1 | | 65.00 | 65.00 | 65.00 | 65.00 | 65.00 | 65.00 | 65.00 | 65.00 | 65.00 |
| Carbon black 2 | 90.00 | | | | | | | | | |
| Zinc oxide | 3.00 | 5.00 | 5.00 | 5.00 | 5.00 | 5.00 | 5.00 | 5.00 | 5.00 | 5.00 |
| Stearic acid | 1.00 | 1.00 | 1.00 | 1.00 | 1.00 | 1.00 | 1.00 | 1.00 | 1.00 | 1.00 |
| Sulfur | 1.78 | 1.78 | 1.78 | 1.78 | 1.78 | 1.78 | 1.78 | 1.78 | 1.78 | 1.78 |
| Vulcanization accelerator (DM) | 1.50 | 1.50 | 1.50 | 1.50 | 1.50 | 1.50 | 1.50 | 1.50 | 1.50 | 1.50 |

The components shown in Table 1 are as follows.

| Table 2 | | | |
|---|---|---|---|
| Components of rubber composition A | Compound name | Trade name | Manufacturer |
| NBR1 | Acrylonitrile butadiene rubber, ML₁₊₄(@100°C) = 45, ACN = 33% | NANNCAR 3345 | NANTEX Industry Co., Ltd. |
| NBR2 | Acrylonitrile butadiene rubber, ML₁₊₄ (@100°C) = 27, ACN = 33.5% | NIPOL DN219 | Zeon Corporation |
| ENR1 | Epoxidized natural rubber, ML₁₊₄ (@100°C) = 85, epoxidation rate = 50 mol% | Epoxyprene 50 | Muang Mai Guthrie Public Company Limited (MMG) |
| ENR2 | Epoxidized natural rubber, ML₁₊₄ (@100°C) = 85, epoxidation rate = 25 mol% | Epoxyprene 25 | Muang Mai Guthrie Public Company Limited (MMG) |
| SBR | Styrene butadiene rubber, ML₁₊₄ (@100°C) = 52 | NIPOL 1502 | Zeon Corporation |
| NR | Natural rubber | STR-20 | TECK BEE HANG CO., Limited (TBH) |
| Carbon black 1 | GPF grade carbon black | Seast V | Tokai Carbon Co., Ltd. |
| Carbon black 2 | SRF grade carbon black | Seast S | Tokai Carbon Co., Ltd. |
| Zinc oxide | ZnO | Zinc Oxide #3 | Seido Chemical |
| | | | Industry Co., Ltd. |
| Stearic acid | Stearic acid | LUNAC S-25 | Kao Corporation |
| Sulfur | Sulfur | "GOLDEN FLOWER" Sulfur Powder | Tsurumi Chemical Industry Co., Ltd. |
| Vulcanization accelerator | Dibenzothiazyldisulfide | NOCCELER DM | Ouchi Shinko Chemical Industrial Co., Ltd. |

| Table 3 | | | | | | | | | | |
|---|---|---|---|---|---|---|---|---|---|---|
| Working Examples I | | 1 | | 2 | 3 | 4 | 5 | 6 | 7 | 8 |
| Comparative Examples I | 1 | | 2 | | | | | | | |
| Rubber composition A to be used | 1 | 2 | 3 | 4 | 5 | 6 | 7 | 8 | 9 | 10 |

| Rubber/resin adhesion 1 | | | | | | | | | | |
|---|---|---|---|---|---|---|---|---|---|---|
| Adhesion force (units: N/25 mm) | 95 | 97 | 95 | | | | | | | |
| Rubber attachment (units: %) | 100 | 100 | 100 | | | | | | | |

| Rubber/resin adhesion 2 | | | | | | | | | | |
|---|---|---|---|---|---|---|---|---|---|---|
| Adhesion force (units: N/25 mm) | Not adhered | 105 | Not adhered | 84 | 112 | 110 | 108 | 103 | 82 | 89 |
| Rubber attachment (units: %) | Not adhered | 100 | Not adhered | 100 | 100 | 100 | 100 | 100 | 100 | 100 |

| Rubber/resin adhesion 3 | | | | | | | | | | |
|---|---|---|---|---|---|---|---|---|---|---|
| Adhesion force (units: N/25 mm) | Not adhered | 109 | Not adhered | 90 | 115 | 109 | 111 | 108 | 86 | 91 |
| Rubber attachment (units: %) | Not adhered | 100 | Not adhered | 100 | 100 | 100 | 100 | 100 | 100 | 100 |

| Table 4 | | | | | | | | | | |
|---|---|---|---|---|---|---|---|---|---|---|
| Comparative Examples I | 3 | 4 | 5 | 6 | 7 | 8 | 9 | 10 | 11 | 12 |
| Rubber composition A to be used | 1 | 2 | 3 | 4 | 5 | 6 | 7 | 8 | 9 | 10 |
| Rubber / resin adhesion 4 (units: N/25 mm) | Not adhered | | | | | | | | | |

| Table 5-1 | | | | | | | | |
|---|---|---|---|---|---|---|---|---|
| Rubber composition B | 1 | 2 | 3 | 4 | 5 | 6 | 7 | 8 |
| NBR1 | 50.00 | | | | | | | |
| NBR2 | 50.00 | 70.00 | 70.00 | 100.00 | 90.00 | 70.00 | 30.00 | |
| ENR | | 30.00 | 30.00 | | 10.00 | 30.00 | 70.00 | 100.00 |
| Carbon black 1 | | 65.00 | 50.00 | 50.00 | 50.00 | 50.00 | 50.00 | 50.00 |
| Carbon black 2 | 90.00 | | | | | | | |
| Filler | | | 20.00 | 20.00 | 20.00 | 20.00 | 20.00 | 20.00 |
| Zinc oxide | 3.00 | 5.00 | 5.00 | 5.00 | 5.00 | 5.00 | 5.00 | 5.00 |
| Stearic acid | 1.00 | 1.00 | 1.00 | 1.00 | 1.00 | 1.00 | 1.00 | 1.00 |
| Sulfur | 1.78 | 1.78 | 2.20 | 2.20 | 2.20 | 2.20 | 2.20 | 2.20 |
| Vulcanization accelerator 1 | | | | 0.40 | 0.40 | 0.40 | 0.40 | 0.40 |
| Vulcanization accelerator 2 | 1.50 | 1.50 | 1.50 | | | | | |
| Alkylphenol-formaldehyde resin | | | 5.00 | 5.00 | 5.00 | 5.00 | 5.00 | 5.00 |

| Table 5-2 | | | | | | | | |
|---|---|---|---|---|---|---|---|---|
| Rubber composition B | 9 | 10 | 11 | 12 | 13 | 14 | 15 | 16 |
| NBR1 | | | | | | | | |
| NBR2 | 70.00 | 70.00 | 70.00 | 70.00 | 70.00 | 70.00 | 70.00 | 70.00 |
| ENR | 30.00 | 30.00 | 30.00 | 30.00 | 30.00 | 30.00 | 30.00 | 30.00 |
| Carbon black 1 | 50.00 | 50.00 | 50.00 | 50.00 | 50.00 | 50.00 | 50.00 | 50.00 |
| Carbon black 2 | | | | | | | | |
| Filler | 20.00 | 20.00 | 20.00 | 20.00 | 20.00 | 20.00 | 20.00 | 20.00 |
| Zinc oxide | 5.00 | 5.00 | 5.00 | 5.00 | 5.00 | 5.00 | 5.00 | 5.00 |
| Stearic acid | 1.00 | 1.00 | 1.00 | 1.00 | 1.00 | 1.00 | 1.00 | 1.00 |
| Sulfur | 2.20 | 2.20 | 2.20 | 2.20 | 2.20 | 2.20 | 2.20 | 2.20 |
| Vulcanization accelerator 1 | 0.10 | 0.20 | 2.00 | 3.50 | 0.40 | 0.40 | 0.40 | 0.40 |
| Vulcanization accelerator 2 | | | | | | | | |
| Alkylphenol-formaldehyde resin | 5.00 | 5.00 | 5.00 | 5.00 | 0.80 | 1.00 | 7.00 | 12.00 |

The components shown in Table 5 are as follows.

| Table 6 | | | |
|---|---|---|---|
| Components of rubber composition B | Compound name | Trade name | Manufacturer |
| NBR1 | Acrylonitrile butadiene rubber, ML₁₊₄ (@100°C) = 45, ACN = 33% | NANNCAR 3345 | NANTEX Industry Co., Ltd. |
| NBR2 | Acrylonitrile butadiene rubber, ML₁₊₄ (@100°C) = 27, ACN = 33.5% | NIPOL DN219 | Zeon Corporation |
| ENR | Epoxidized natural rubber, ML1+4(@100°C) = 85, epoxidation rate = 50 mol% | Epoxyprene 50 | Muang Mai Guthrie Public Company Limited (MMG) |
| Carbon black 1 | GPF grade carbon black | Seast V | Tokai Carbon Co., Ltd. |
| Carbon black 2 | SRF grade carbon black | Seast S | Tokai Carbon Co., Ltd. |
| Filler | Silica | Nipsil AQ | Tosoh Silica |
| | | | Corporation |
| Zinc oxide | ZnO | Zinc Oxide #3 | Seido Chemical Industry Co., Ltd. |
| Stearic acid | Stearic acid | LUNAC S-25 | Kao Corporation |
| Sulfur | Sulfur | "GOLDEN FLOWER" Sulfur Powder | Tsurumi Chemical Industry Co., Ltd. |
| Vulcanization accelerator 1 | Tetramethylthiuram monosulfide | Sanceler TS | Sanshin Chemical Industry Co., Ltd. |
| Vulcanization accelerator 2 | Dibenzothiazyldisulfide | NOCCELER DM | Ouchi Shinko Chemical Industrial Co., Ltd. |
| Alkylphenol-formaldehyde resin | Brominated alkylphenol-formaldehyde resin | Tackirol 250-I (YR) | Taoka Chemical Co., Ltd. |

| Table 7-1 | | | | | | | | |
|---|---|---|---|---|---|---|---|---|
| Working Examples II | | 1 | 2 | | 3 | 4 | 5 | 6 |
| Comparative Examples II | 1 | | | 2 | | | | |
| Rubber composition B to be used | 1 | 2 | 3 | 4 | 5 | 6 | 7 | 8 |
| Rubber / resin adhesion 1 (units: N/25 mm) | | | | | | | | |
| Adhesion force (units: N/25 mm) | 95 | 97 | | | | | | |
| Rubber attachment (units: %) | 100 | 100 | | | | | | |
| Rubber / resin adhesion 2 (units: N/25 mm) | | | | | | | | |
| Adhesion force (units: N/25 mm) | Not adhered | 105 | 90 | Not adhered | 83 | 90 | 93 | 96 |
| Rubber attachment (units: %) | Not adhered | 100 | 100 | Not adhered | 100 | 100 | 100 | 100 |
| Rubber / resin adhesion 3 (units: N/25 mm) | | | | | | | | |
| Adhesion force (units: N/25 mm) | Not adhered | 109 | 96 | Not adhered | 90 | 95 | 91 | 95 |
| Rubber attachment (units: %) | Not adhered | 100 | 100 | Not adhered | 100 | 100 | 100 | 100 |
| Hose-shaped wire adhesion (units: N/25 mm) | | | | | | | | |
| Adhesion force (units: N/25 mm) | 75 | 22 | 152 | 62 | 212 | 225 | 235 | 240 |
| Rubber attachment (units: %) | 0 | 0 | 20 | 0 | 100 | 100 | 100 | 100 |

| Table 7-2 | | | | | | | | |
|---|---|---|---|---|---|---|---|---|
| Working Examples II | 7 | 8 | 9 | 10 | 11 | 12 | 13 | 14 |
| Comparative Examples II | | | | | | | | |
| Rubber composition B to be used | 9 | 10 | 11 | 12 | 13 | 14 | 15 | 16 |
| Rubber / resin adhesion 1 (units: N/25 mm) | | | | | | | | |
| Adhesion force (units: N/25 mm) | | | | | | | | |
| Rubber attachment (units: %) | | | | | | | | |
| Rubber / resin adhesion 2 (units: N/25 mm) | | | | | | | | |
| Adhesion force (units: N/25 mm) | 83 | 87 | 84 | 79 | 86 | 85 | 90 | 84 |
| Rubber attachment (units: %) | 100 | 100 | 100 | 100 | 100 | 100 | 100 | 100 |
| Rubber / resin adhesion 3 (units: N/25 mm) | | | | | | | | |
| Adhesion force (units: N/25 mm) | 89 | 88 | 91 | 81 | 85 | 95 | 94 | 89 |
| Rubber attachment (units: %) | 100 | 100 | 100 | 100 | 100 | 100 | 100 | 100 |
| Hose-shaped wire adhesion (units: N/25 mm) | | | | | | | | |
| Adhesion force (units: N/25 mm) | 129 | 222 | 235 | 204 | 42 | 135 | 251 | 179 |
| Rubber attachment (units: %) | 10 | 90 | 100 | 95 | 40 | 95 | 100 | 40 |

| Table 8-1 | | | | | | | | |
|---|---|---|---|---|---|---|---|---|
| Comparative Examples II | 3 | 4 | 5 | 6 | 7 | 8 | 9 | 10 |
| Rubber composition B to be used | 1 | 2 | 3 | 4 | 5 | 6 | 7 | 8 |
| Rubber / resin adhesion 4 (units: N/25 mm) | Not adhered | | | | | | | |

| Table 8-2 | | | | | | | | |
|---|---|---|---|---|---|---|---|---|
| Comparative Examples II | 11 | 12 | 13 | 14 | 15 | 16 | 17 | 18 |
| Rubber composition B to be used | 9 | 10 | 11 | 12 | 13 | 14 | 15 | 16 |
| Rubber / resin adhesion 4 (units: N/25 mm) | Not adhered | | | | | | | |

| Table 9-1 | | | | | | | | | | |
|---|---|---|---|---|---|---|---|---|---|---|
| Rubber composition C | 1 | 2 | 3 | 4 | 5 | 6 | 7 | 8 | 9 | 10 |
| NBR1 | 50.00 | | | | | | | | | |
| NBR2 | 50.00 | 70.00 | 70.00 | 70.00 | 100.00 | 90.00 | 70.00 | 30.00 | | 70.00 |
| ENR | | 30.00 | 30.00 | 30.00 | | 10.00 | 30.00 | 70.00 | 100.00 | 30.00 |
| Carbon black 1 | | 65.00 | 50.00 | 50.00 | 50.00 | 50.00 | 50.00 | 50.00 | 50.00 | 50.00 |
| Carbon black 2 | 90.00 | | | | | | | | | |
| Zinc oxide | | | 20.00 | 20.00 | 20.00 | 20.00 | 20.00 | 20.00 | 20.00 | 20.00 |
| Stearic acid | 3.00 | 5.00 | 5.00 | 5.00 | 5.00 | 5.00 | 5.00 | 5.00 | 5.00 | 5.00 |
| Lubricant | 1.00 | 1.00 | 1.00 | 1.00 | 1.00 | 1.00 | 1.00 | 1.00 | 1.00 | 1.00 |
| Sulfur | 1.78 | 1.78 | 2.20 | 2.20 | 2.20 | 2.20 | 2.20 | 2.20 | 2.20 | 2.20 |
| Vulcanization accelerator 1 | | | | 2.00 | | | | | | |
| Vulcanization accelerator 2 | 1.50 | 1.50 | 1.50 | | | | | | | |
| Vulcanization accelerator 3 | | | | | 1.00 | 1.00 | 1.00 | 1.00 | 1.00 | 0.40 |
| Vulcanization accelerator 4 | | | | | | | | | | |
| Alkylphenol-formaldehyde resin | | | 5.00 | 5.00 | 5.00 | 5.00 | 5.00 | 5.00 | 5.00 | 5.00 |

| Table 9-2 | | | | | | | | | | |
|---|---|---|---|---|---|---|---|---|---|---|
| Rubber composition C | 11 | 12 | 13 | 14 | 15 | 16 | 17 | 18 | 19 | 20 |
| NBR1 | | | | | | | | | | |
| NBR2 | 70.00 | 70.00 | 70.00 | 70.00 | 70.00 | 70.00 | 70.00 | 70.00 | 70.00 | 70.00 |
| ENR | 30.00 | 30.00 | 30.00 | 30.00 | 30.00 | 30.00 | 30.00 | 30.00 | 30.00 | 30.00 |
| Carbon black 1 | 50.00 | 50.00 | 50.00 | 50.00 | 50.00 | 50.00 | 50.00 | 50.00 | 50.00 | 50.00 |
| Carbon black 2 | | | | | | | | | | |
| Zinc oxide | 20.00 | 20.00 | 20.00 | 20.00 | 20.00 | 20.00 | 20.00 | 20.00 | 20.00 | 20.00 |
| Stearic acid | 5.00 | 5.00 | 5.00 | 5.00 | 5.00 | 5.00 | 5.00 | 5.00 | 5.00 | 5.00 |
| Lubricant | 1.00 | 1.00 | 1.00 | 1.00 | 1.00 | 1.00 | 1.00 | 1.00 | 1.00 | 1.00 |
| Sulfur | 2.20 | 2.20 | 2.20 | 2.20 | 2.20 | 2.20 | 2.20 | 2.20 | 2.20 | 2.20 |
| Vulcanization accelerator | | | | | | | | | | |
| 1 | | | | | | | | | | |
| Vulcanization accelerator 2 | | | | | | | | | | |
| Vulcanization accelerator 3 | 0.60 | 2.00 | 3.00 | 5.00 | 6.00 | | 1.00 | 1.00 | 1.00 | 1.00 |
| Vulcanization accelerator 4 | | | | | | 1.00 | | | | |
| Alkylphenol-formaldehyde resin | 5.00 | 5.00 | 5.00 | 5.00 | 5.00 | 5.00 | 0.80 | 1.00 | 7.00 | 12.00 |

The components shown in Table 9 are as follows.

| Table 10 | | | |
|---|---|---|---|
| Components of rubber composition C | Compound name | Trade name | Manufacturer |
| NBR1 | Acrylonitrile butadiene rubber, ML₁₊₄ (@100°C) = 45, ACN = 33% | NANNCAR 3345 | NANTEX Industry Co., Ltd. |
| NBR2 | Acrylonitrile butadiene rubber, ML₁₊₄ (@100°C) = 27, ACN = 33.5% | NIPOL DN219 | Zeon Corporation |
| ENR | Epoxidized natural rubber, ML1+4(@100°C) = 85, epoxidation rate = 50 mol% | Epoxyprene 50 | Muang Mai Guthrie Public Company Limited (MMG) |
| Carbon black 1 | GPF grade carbon black | Seast V | Tokai Carbon Co., Ltd. |
| Carbon black 2 | SRF grade carbon black | Seast S | Tokai Carbon Co., Ltd. |
| Lubricant | Hydrophilic higher fatty acid ester | Struktol WB212 | Schill & Seilacher GMBH &CO. |
| Zinc oxide | ZnO | Zinc Oxide #3 | Seido Chemical Industry Co., Ltd. |
| Stearic acid | Stearic acid | LUNAC S-25 | Kao Corporation |
| Sulfur | Sulfur | "GOLDEN FLOWER" Sulfur Powder | Tsurumi Chemical Industry Co., Ltd. |
| Vulcanization accelerator 1 | Tetramethylthiuram monosulfide | Sanceler TS | Sanshin Chemical Industry Co., |
| | | | Ltd. |
| Vulcanization accelerator 2 | Dibenzothiazyldisulfide | NOCCELER DM | Ouchi Shinko Chemical Industrial Co., Ltd. |
| Vulcanization accelerator 3 | N-cyclohexyl-2-benzothiazolyl sulfenamide | NOCCELER CZ-G | Ouchi Shinko Chemical Industrial Co., Ltd. |
| Vulcanization accelerator 4 | N-tert-butyl-2-benzothiazolylsulfenamide | NOCCELER NS-P | Ouchi Shinko Chemical Industrial Co., Ltd. |
| Alkylphenol-formaldehyde resin | Brominated alkylphenol-formaldehyde resin | Tackirol 250-I (YR) | Taoka Chemical Co., Ltd. |

| Table 11-1 | | | | | | | | | | |
|---|---|---|---|---|---|---|---|---|---|---|
| Working Examples III | | 1 | 2 | 3 | | 4 | 5 | 6 | 7 | 8 |
| Comparative Examples III | 1 | | | | 2 | | | | | |
| Rubber composition C to be used | 1 | 2 | 3 | 4 | 5 | 6 | 7 | 8 | 9 | 10 |
| Rubber / resin adhesion 1 (units: N/25 mm) @ RT | | | | | | | | | | |
| Adhesion force (units: N/25 mm) | 95 | 97 | | | | | | | | |
| Rubber attachment (units: %) | 100 | 100 | | | | | | | | |
| Rubber / resin adhesion 1 (units: N/25 mm) @ 70°C | | | | | | | | | | |
| Adhesion force (units: N/25 mm) | 52 | 54 | | | | | | | | |
| Rubber attachment (units: %) | 100 | 100 | | | | | | | | |
| Rubber / resin adhesion 2 (units: N/25 mm) @ RT | | | | | | | | | | |
| Adhesion force (units: N/25 mm) | Not adhered | 105 | 90 | 84 | Not adhered | 95 | 106 | 105 | 108 | 66 |
| Rubber attachment (units: %) | Not adhered | 100 | 100 | 100 | Not adhered | 100 | 100 | 100 | 100 | 100 |
| Rubber / resin adhesion 2 (units: N/25 mm) @ 70°C | | | | | | | | | | |
| Adhesion force (units: N/25 mm) | Not adhered | 39 | 24 | 14 | Not adhered | 46 | 55 | 50 | 53 | 36 |
| Rubber attachment (units: %) | Not adhered | 100 | 100 | 100 | Not adhered | 100 | 100 | 100 | 100 | 100 |
| Rubber / resin adhesion 3 (units: N/25 mm) | | | | | | | | | | |
| Adhesion force (units: N/25 mm) | Not adhered | 109 | 96 | 85 | Not adhered | 102 | 115 | 112 | 120 | 70 |
| Rubber attachment (units: %) | Not adhered | 100 | 100 | 100 | Not adhered | 100 | 100 | 100 | 100 | 100 |
| Hose-shaped wire adhesion (units: N/25 mm) | | | | | | | | | | |
| Adhesion force (units: N/25 mm) | 75 | 22 | 152 | 235 | 189 | 190 | 209 | 204 | 207 | 100 |
| Rubber attachment (units: %) | 0 | 0 | 20 | 100 | 90 | 95 | 95 | 100 | 100 | 10 |

| Table 11-2 | | | | | | | | | | |
|---|---|---|---|---|---|---|---|---|---|---|
| Working Examples III | 9 | 10 | 11 | 12 | 13 | 14 | 15 | 16 | 17 | 18 |
| Comparative Examples III | | | | | | | | | | |
| Rubber composition C to be used | 11 | 12 | 13 | 14 | 15 | 16 | 17 | 18 | 19 | 20 |
| Rubber / resin adhesion 1 (units: N/25 mm) @ RT | | | | | | | | | | |
| Adhesion force (units: N/25 mm) | | | | | | | | | | |
| Rubber attachment (units: %) | | | | | | | | | | |
| Rubber / resin adhesion 1 (units: N/25 mm) @ 70°C | | | | | | | | | | |
| Adhesion force (units: N/25 mm) | | | | | | | | | | |
| Rubber attachment (units: %) | | | | | | | | | | |
| Rubber / resin adhesion 2 (units: N/25 mm) @ RT | | | | | | | | | | |
| Adhesion force (units: N/25 mm) | 79 | 116 | 117 | 89 | 57 | 88 | 103 | 102 | 90 | 102 |
| Rubber attachment (units: %) | 100 | 100 | 100 | 100 | 100 | 100 | 100 | 100 | 100 | 100 |
| Rubber / resin adhesion 2 (units: N/25 mm) @ 70°C | | | | | | | | | | |
| Adhesion force (units: N/25 mm) | 44 | 54 | 56 | 45 | 30 | 50 | 50 | 53 | 49 | 46 |
| Rubber attachment (units: %) | 100 | 100 | 100 | 100 | 100 | 100 | 100 | 100 | 100 | 100 |
| Rubber / resin adhesion 3 (units: N/25 mm) | | | | | | | | | | |
| Adhesion force (units: N/25 mm) | 81 | 120 | 120 | 92 | 60 | 96 | 110 | 108 | 99 | 106 |
| Rubber attachment (units: %) | 100 | 100 | 100 | 100 | 100 | 100 | 100 | 100 | 100 | 100 |
| Hose-shaped wire adhesion (units: N/25 mm) | | | | | | | | | | |
| Adhesion force (units: N/25 mm) | 199 | 227 | 229 | 188 | 167 | 226 | 38 | 174 | 219 | 179 |
| Rubber attachment (units: %) | 90 | 100 | 100 | 100 | 90 | 100 | 30 | 95 | 100 | 95 |

| Table 12-1 | | | | | | | | | | |
|---|---|---|---|---|---|---|---|---|---|---|
| Comparative Examples III | 3 | 4 | 5 | 6 | 7 | 8 | 9 | 10 | 11 | 12 |
| Rubber composition C to be used | 1 | 2 | 3 | 4 | 5 | 6 | 7 | 8 | 9 | 10 |
| Rubber / resin adhesion 4 (units: N/25 mm) | Not adhered | | | | | | | | | |

| Table 12-2 | | | | | | | | | | |
|---|---|---|---|---|---|---|---|---|---|---|
| Comparative Examples III | 13 | 14 | 15 | 16 | 17 | 18 | 19 | 20 | 21 | 22 |
| Rubber composition C to be used | 11 | 12 | 13 | 14 | 15 | 16 | 17 | 18 | 19 | 20 |
| Rubber / resin adhesion 4 (units: N/25 mm) | Not adhered | | | | | | | | | |

As can be seen from the results in Table 3, Table 4, Table 7, Table 8, Table 11, and Table 12, in Comparative Examples I-1, 2, Comparative Examples II-1, 2, and Comparative Examples III-1, 2 which did not use the rubber composition that includes the epoxidized rubber, there was no adhesion between the resin layer and the rubber layer. In Comparative Examples I-3 to 12, Comparative Examples II-3 to 18, and Comparative Examples III-3 to 22 which did not use the rubber composition that includes the ionomer, there was no adhesion between the resin layer and the rubber layer.

In contrast, in Working Examples I-1 to 18, Working Examples II-1 to 14, and Working Examples III-1 to 18, the adhesion between the resin layer and the rubber layer was excellent. Also, as can be seen from Working Example I-1 (results for rubber/resin adhesion 1 to 3), the adhesion between the resin layer and the rubber layer of the rubber/resin composite hose of the present invention (rubber/resin adhesion 2, 3) can be made equal to or greater than the adhesion between the resin layer and the rubber layer using current adhesives (rubber/resin adhesion 1). Likewise for Working Example II-1 and Working Example III-1.

In Working Examples II-3 to 14 and Working Examples III-3 to 18, the rubber composition further includes a thiuram vulcanization accelerator and/or a sulfenamide vulcanization accelerator, and an alkylphenol-formaldehyde resin, so adhesion to the brass-plated wire is enabled, while maintaining adhesion to the resin layer. Also, in the case of the sulfenamide accelerator, it was possible to provide adhesion between the resin layer and the rubber layer at high temperatures (for example, from 50 to 120°C) that is equal to or greater than the case where the resin layer and the rubber layer are bonded using current adhesives (for example, TY-PLY-BN: a phenolic resin adhesive).

### REFERENCE NUMERALS

- 1: Rubber/resin composite hose
- 3: Resin layer (innermost layer)
- 5: Rubber layer
- 6: Inner tube
- 7: Reinforcing layer
- 9: Outer layer

## Claims

1. A rubber/resin composite hose comprising an inner tube (6), the inner tube (6) including a resin layer (3) as an innermost layer and a rubber layer (5) adjacent to the innermost layer,
a material used in the resin layer (3) being a resin composition that includes a resin including at least an ionomer containing a metal carboxylate, and
a material used in the rubber layer (5) being a rubber composition that includes a rubber including at least an epoxidized rubber.

2. The rubber/resin composite hose according to claim 1, wherein a quantity of the ionomer in the resin is from 10 to 100 mass% of a total quantity of the resin, and
a quantity of the epoxidized rubber in the rubber is from 10 to 100 mass% of a total quantity of the rubber.

3. The rubber/resin composite hose according to claim 1 or 2, wherein the epoxidized rubber is an epoxidized natural rubber.

4. The rubber/resin composite hose according to any of claims 1 to 3, wherein an epoxidization rate of the epoxidized rubber is from 2 to 75 mol%.

5. The rubber/resin composite hose according to any of claims 1 to 4, wherein the rubber further includes an acrylonitrile-butadiene rubber (NBR).

6. The rubber/resin composite hose according to any of claims 1 to 5, wherein the resin further includes a polyamide.

7. The rubber/resin composite hose according to claim 6, wherein the polyamide is at least one selected from the group consisting of polyamide 6, polyamide 11, polyamide 12, polyamide 4-6, polyamide 6-6, polyamide 6-10, polyamide 6-12, and polyamide MXD-6.

8. The rubber/resin composite hose according to any of claims 1 to 7, wherein the rubber composition further includes a thiuram vulcanization accelerator and/or a sulfenamide vulcanization accelerator, and an alkylphenol-formaldehyde resin.

9. The rubber/resin composite hose according to any of claims 1 to 8, wherein there is no adhesive layer between the resin layer (3) and the rubber layer (5).

10. The rubber/resin composite hose according to any of claims 1 to 9, wherein the resin layer (3) and the rubber layer (5) are directly bonded.

11. The rubber/resin composite hose according to any of claims 1 to 10, wherein a reinforcing layer (7) and an outer layer (9) are provided on an outer side of the inner tube (6).

12. The rubber/resin composite hose according to claim 11, wherein a material used in the reinforcing layer (7) is a brass-plated wire.

13. A method of manufacturing a rubber/resin composite hose, comprising: manufacturing the rubber/resin composite hose described in any of claims 1 to 12, by at least vulcanization bonding the resin layer and the rubber layer.

## Patentansprüche

1. Schlauch aus Gummi-/Harzverbund umfassend ein Innenrohr (6), wobei das Innenrohr (6) eine Harzschicht (3) als eine innerste Schicht und eine Kautschukschicht (5)
im Anschluss an die innerste Schicht umfasst,
wobei ein in der Harzschicht (3) verwendetes Material eine Harzzusammensetzung ist, die ein Harz umfasst, das mindestens ein Ionomer umfasst, das ein Metallcarboxylat enthält, und
ein in der Kautschukschicht (5) verwendetes Material eine Kautschukzusammensetzung ist, die einen Kautschuk umfasst, der mindestens einen epoxidierten Kautschuk umfasst.

2. Schlauch aus Gummi-/Harzverbund nach Anspruch 1, wobei eine Menge des Ionomers in dem Harz von 10 bis 100 Masse-% einer Gesamtmenge des Harzes beträgt, und
eine Menge des epoxidierten Kautschuks in dem Kautschuk von 10 bis 100 Masse-%
einer Gesamtmenge des Kautschuks beträgt.

3. Schlauch aus Gummi-/Harzverbund nach Anspruch 1 oder 2, wobei der epoxidierte Kautschuk ein epoxidierter Naturkautschuk ist.

4. Schlauch aus Gummi-/Harzverbund nach einem der Ansprüche 1 bis 3,
wobei eine Epoxidierungsquote des epoxidierten Kautschuks von 2 bis 75 Mol-% beträgt.

5. Schlauch aus Gummi-/Harzverbund nach einem der Ansprüche 1 bis 4,
wobei der Kautschuk weiterhin einen Acrylnitril-Butadien-Kautschuk (NBR) umfasst.

6. Schlauch aus Gummi-/Harzverbund nach einem der Ansprüche 1 bis 5,
wobei das Harz weiterhin ein Polyamid umfasst.

7. Schlauch aus Gummi-/Harzverbund nach Anspruch 6, wobei das Polyamid mindestens eines ist, das aus der Gruppe ausgewählt ist bestehend aus Polyamid 6,
Polyamid 11, Polyamid 12, Polyamid 4-6, Polyamid 6-6, Polyamid 6-10, Polyamid 6-12 und Polyamid MXD-6.

8. Schlauch aus Gummi-/Harzverbund nach einem der Ansprüche 1 bis 7,
wobei die Kautschukzusammensetzung weiterhin einen Thiuram-Vulkanisationsbeschleuniger und/oder einen Sulfenamid--Vulkanisationsbeschleuniger und ein Alkylphenol-Formaldehyd-Harz umfasst.

9. Schlauch aus Gummi-/Harzverbund nach einem der Ansprüche 1 bis 8,
wobei keine Klebeschicht zwischen der Harzschicht (3) und der Kautschukschicht (5) vorhanden ist.

10. Schlauch aus Gummi-/Harzverbund nach einem der Ansprüche 1 bis 9,
wobei die Harzschicht (3) und die Kautschukschicht (5) direkt verbunden sind.

11. Schlauch aus Gummi-/Harzverbund nach einem der Ansprüche 1 bis 10,
wobei eine Verstärkungsschicht (7) und eine Außenschicht (9) auf einer Außenseite des Innenrohrs (6) vorgesehen sind.

12. Schlauch aus Gummi-/Harzverbund nach Anspruch 11, wobei ein in der Verstärkungsschicht (7) verwendetes Material ein vermessingter Draht ist.

13. Verfahren zur Herstellung eines Schlauchs aus Gummi-/Harzverbund, umfassend: Herstellen des nach einem der Ansprüche 1 bis 12 beschriebenen Schlauchs aus Gummi-/Harzverbund mindestens durch Vulkanisationsverbinden der Harzschicht und der Kautschukschicht.

## Revendications

1. Tuyau souple composite en caoutchouc/résine comprenant un tube interne (6), le tube interne (6) incluant une couche de résine (3) en tant que couche la plus interne et une couche de caoutchouc (5) adjacente à la couche la plus interne,
un matériau utilisé dans la couche de résine (3) étant une composition de résine qui comprend une résine comprenant au moins un ionomère contenant un carboxylate métallique, et
un matériau utilisé dans la couche de caoutchouc (5) étant une composition de caoutchouc qui comprend un caoutchouc comprenant au moins un caoutchouc époxydé.

2. Tuyau souple composite en caoutchouc/résine selon la revendication 1, dans lequel une quantité de l'ionomère dans la résine va de 10 à 100 % en masse d'une quantité totale de la résine, et
une quantité du caoutchouc époxydé dans le caoutchouc va de 10 à 100 % en masse d'une quantité totale du caoutchouc.

3. Tuyau souple composite en caoutchouc/résine selon la revendication 1 ou la revendication 2, dans lequel le caoutchouc époxydé est un caoutchouc naturel époxydé.

4. Tuyau composite en caoutchouc/résine selon l'une quelconque des revendications 1 à 3, dans lequel le taux d'époxydation du caoutchouc époxydé va de 2 à 75 % en mole.

5. Tuyau souple composite en caoutchouc/résine selon l'une quelconque des revendications 1 à 4, dans lequel le caoutchouc comprend en outre un caoutchouc acrylonitrile-butadiène (NBR).

6. Tuyau souple composite en caoutchouc/résine selon l'une quelconque des revendications 1 à 5, dans lequel la résine comprend en outre un polyamide.

7. Tuyau souple composite en caoutchouc/résine selon la revendication 6, dans lequel le polyamide et au moins l'un choisi dans le groupe constitué du polyamide 6, du polyamide 11, du polyamide 12, du polyamide 4-6, du polyamide 6-6, du polyamide 6-10, du polyamide 6-12 et du polyamide MXD-6.

8. Tuyau souple composite en caoutchouc/résine selon l'une quelconque des revendications 1 à 7, dans lequel la composition de caoutchouc comprend en outre un accélérateur de vulcanisation thiurame et/ou un accélérateur de vulcanisation sulfénamide, et une résine alkylphénol-formaldéhyde.

9. Tuyau souple composite en caoutchouc/résine selon l'une quelconque des revendications 1 à 8, dans lequel il n'y a aucune couche adhésive entre la couche de résine (3) et la couche de caoutchouc (5).

10. Tuyau souple composite en caoutchouc/résine selon l'une quelconque des revendications 1 à 9, dans lequel la couche de résine (3) et la couche de caoutchouc (5) sont directement liées.

11. Tuyau souple composite en caoutchouc/résine selon l'une quelconque des revendications 1 à 10, dans lequel une couche d'armature (7) et une couche externe (9) sont placées sur un côté externe du tube interne (6).

12. Tuyau souple composite de caoutchouc/résine selon la revendication 11, dans lequel le matériau utilisé dans la couche d'armature (7) est un fil laitonné.

13. Procédé de fabrication d'un tuyau souple composite en caoutchouc/résine, comprenant : la fabrication du tuyau souple en caoutchouc/résine décrit dans l'une quelconque des revendications 1 à 12, par au moins une liaison par vulcanisation de la couche de résine et de la couche de caoutchouc.
